# EUROPEAN PATENT APPLICATION

(11) **EP 2 933 950 A1**
(43) Date of publication of application: **21.10.2015**
(21) Application number: 14305556.4
(22) Date of filing: 15.04.2014
(51) Int. Cl.: H04L 12/24, H04L 12/26

(54) **Method of predicting support calls and applying pro-active action**

(71) Applicant: Thomson Licensing, 92130 Issy-les-Moulineaux (FR)
(72) Inventor: Van de Poel, Dirk, 2630 Aartselaar (BE); Goemaere, Patrick, 2960 Brecht (BE); Jonckheer, Kurt, 2000 Antwerpen (BE)
(74) Representative: Lindemann, Robert

(57) **Abstract**

A method of predicting and/or avoiding support calls from users or subscribers of a networked service includes receiving, from a device located remotely at a user's premises and attached via a network connection, and at first intervals, data indicating current operating parameters of the user device. The operating parameters are compared with corresponding predetermined nominal parameters and tolerances. Depending on the result of the comparison, in case of operation outside a range defined by the nominal parameters and tolerances, a process for determining the cause of the operation below nominal parameters and tolerances is initiated. In case the cause can be removed the removal is initiated. In case the cause cannot be removed the user/subscriber is contacted for offering an adjusted subscription of the networked service. In one embodiment the collected data is used for predicting an impending operation outside the nominal range.

## Description

### Field

The invention pertains to the field of monitoring operating parameters of networked service offerings.

### Background

Today many services offered are provided through service-provider-owned networked equipment installed at the customer's premises. The term networked includes all kinds of networks capable of transmitting data, in particular internet protocol-based, or IP-based, networks. As is common with most technical apparatuses, the equipment may perform within or outside normal operating parameters, with tolerances applying. Operation outside normal operating parameters may be caused through wear, notably in case of equipment having mechanical components, or may be caused by components malfunctions, or by external disturbances. External disturbances include, for example, static or noise on electrical sensor or communication lines, or spurious interfering signals.

Operation outside normal operating parameters typically contravenes the terms of the service agreement, with performance exceeding what was agreed upon in the service agreement usually having less impact on a user. However, performance below the parameters agreed upon in the service agreement will cause the user to make support calls asking the service provider to bring the service back to normal. Some users may tolerate a brief temporary poor performance or may even not notice at all, but in general the users will insist on fulfillment as agreed.

Managing user support calls requires maintaining a corresponding infrastructure. Further, frequent underperformance causes user frustration resulting in a bad reputation of the service provider and eventually causes the number of subscriptions to decrease, i.e. users terminating the existing service subscription and subscribing with a new service provider, also known as churn.

### Summary

The present invention provides a method and a system for predicting user support calls and taking pro-active action for avoiding and/or removing causes of underperformance, targeting at preventing user support calls.

The invention is based on the finding that today, when a user experiences problems in connection with the subscribed service due to service-provider-owned networked equipment installed at the customer's premises not performing as expected, the operator has no knowledge thereof until informed by the user. In this context service-provider-owned networked equipment installed at the customer's premises includes hardware equipment as well as software applications running on subscriber-owned equipment.

Networked equipment allows for monitoring performance parameters and for determining imminent performance below normal operating parameters. Normal operating parameters in this context being used for the operating parameters that have been agreed upon in the service agreement, despite the equipment being capable of providing higher performance operation.

In accordance with the invention the service provider, or a subcontracted entity, monitors operating parameters via the network connection, keeping the data collected for long-term data analysis. The data representing operating parameters are compared against the parameters as agreed upon in the subscription. This allows for the service provider being aware of the current relative performance of the subscribed service and further allows for identifying slowly deteriorating performance, intermittent performance drops, or even complete failure of a service, before a user or subscriber makes a service call.

In case the service performs below an agreed level and tolerance, the operator can take pro-active action, e.g. check whether the equipment needs servicing or repair, or whether the equipment can be optimized, for example by changing settings or updating the firmware, for solving the problem. If servicing or repairing is not an option, either temporarily or generally, the service operator may propose changing the terms of the agreement, reflecting the maximum possible performance of the service. Alternatively, the service provider may offer one or more additional service as a compensation for not meeting the initially negotiated service level.

In one exemplary embodiment of the invention, the method includes receiving, from a device located remotely at a user's premises and attached via a network connection, and at first intervals, data indicating current operating parameters of the user device. The data is received at a data collecting system, which may be a dedicated server or a cloud-based data collecting system. A cloud-based data collecting system suitable for use in accordance with the present invention is described in European patent application no. EP 133 05 710, filed on 30 May 2013, the content of which is hereby incorporated by reference. Other data collecting systems suitable for use in accordance with the present invention include one or more networked computers and storage devices that are programmed to execute the method as described in this specification and in the claims.

First intervals may be defined by predetermined time intervals. Alternatively, the first time intervals may be defined by predetermined accumulated usage times, i.e, when the sum of time intervals that a service has actively been used corresponds to a predetermined total usage time, without the service having to be used continuously. In yet another alternative the first time intervals may be defined by predetermined accumulated consumed amount of the networked service. Such interval is reached whenever a service pertains to delivery or consumption of a quantifiable or countable matter, which may be of physical or virtual nature.

In an embodiment the accumulated usage time or consumed amount is reset when or after the value has been received.

Operating parameters include momentary values or values recorded, continuously or at sampling intervals, over a sampling period. Values recorded over a sampling period may be used preferably in case of operating parameters that are rapidly fluctuating even under normal conditions, when momentary values are unlikely to provide meaningful data.

Operating parameters generally depend from the type of service and may include one or more of the non-exclusive list comprising data rate, latency, response times, quality of service, times of interruption of service, pressure, volume flow, and temperature. The latter three parameters may e.g. be used in connection with a subscription to water or air supply service, or a heating service and the like, while the other parameters may be used e.g. in connection with internet or telephone services. As indicated, the list of parameters is non-exclusive and can be extended by other suitable parameters as appropriate for the type of service that is monitored.

Once the current operating parameters of the user device are received they are compared with corresponding predetermined nominal parameters and tolerances. Nominal operating parameters are defined by nominal performance of a device or by operating parameters set below a device's maximum capability in accordance with a service agreement. In this context tolerances may correspond to actual device or component tolerances or to tolerances as agreed upon in the service agreement. Depending on the result of the comparison, in case of operation outside a range defined by the nominal parameters and tolerances, a process for determining the cause of the operation below nominal parameters and tolerances is initiated. In case the cause can be removed, the removal is initiated, and in case the cause cannot be removed, the user or subscriber is contacted for offering an adjusted subscription of the networked service. Removal of the cause may also involve sending a technician or otherwise appropriately trained person to the customer's premises for further analysis and action.

In this context, operating parameters and tolerances may be given a weight, i.e. values of one parameter spuriously approaching or exceeding a tolerance may have an influence on the result of the comparison in accordance with the associated weight. For example, if a user has indicated a preference for a reliable service over a fast or high performance service, interruptions may be given a higher weight, whereas slow service, or reduced performance may be given a lower weight, even though both service properties may represent operation outside of a range for operating parameters agreed upon in the service agreement. An example for such weighted tolerance is a service agreement for an internet connection, in which the user has indicated that a reliable but frequently slow connection is more acceptable than frequent interruption at otherwise generally higher speed when the service is available.

In an embodiment the process for determining the cause includes an analysis of stored past data representative of operating parameters of the user device.

In a further embodiment, which may also be a development of the previous embodiment, the process for determining the cause is initiated when the current operating parameters approach the bounds of the range defined by the nominal parameters and tolerances, before reaching or exceeding the range's bounds. Such process will also use past data. This allows for identifying a gradual degradation of the service over time, or, more general, identifying a gradual shift of one or more operating parameters over time towards an upper or lower bound of the range. Such degradation may indicate an imminent failure of the service or device and may trigger according pro-active actions for avoiding such failure and ensuring uninterrupted service.

In another embodiment, which may also be a development of the preceding embodiment, the first intervals are reduced in dependency of frequency of occurrence of operation below the nominal parameters and tolerances or when the operating parameters approach the tolerances. In other words, as a parameter comes closer to its maximum tolerance it will be checked more often. Or, if a parameter exceeded a tolerance once, it will be monitored more often for finding out if this operation outside the normal range was a one-time spurious event or an indication of a fault that is developing. With such occurrences of operation getting more frequent the reading of current parameters gets more frequent. Such reduction of the first intervals allows a closer monitoring and may inter alia help identifying a point in time in the future at which a parameter eventually will leave its negotiated range for an absolutely un-tolerable duration or value.

The reception of the operating parameters in any of the embodiments described above may be self-triggered in the device, with the trigger time or event being set from the receiving device. However, it is also possible for the receiving device requesting data each transmission individually.

It will be apparent to the skilled person that one or more of the various refinements, embodiments and developments of the invention described hereinbefore can be combined into a further embodiment of the present invention.

The invention provides a number of advantages: in case the monitoring reveals that a service infrastructure allows for consistently superior performance than expected the service agreement may be renewed under modified terms. This will in turn leave a satisfied customer, and may result in less churn. In any case, the method as described in this specification and in the claims will result in fewer support calls, and thus on average a smaller support center is required. Last but not least the service operator is aware of the benchmarks of his service.

### Brief description of the drawing

The invention will be described in the following with reference to the drawings, in which
- Figure 1: shows a simplified block diagram of the system;
- Figure 2: shows a flow diagram of an exemplary embodiment of the invention; and
- Figure 3: shows a flow diagram of a development of the embodiment of figure 2.

### Description of embodiments

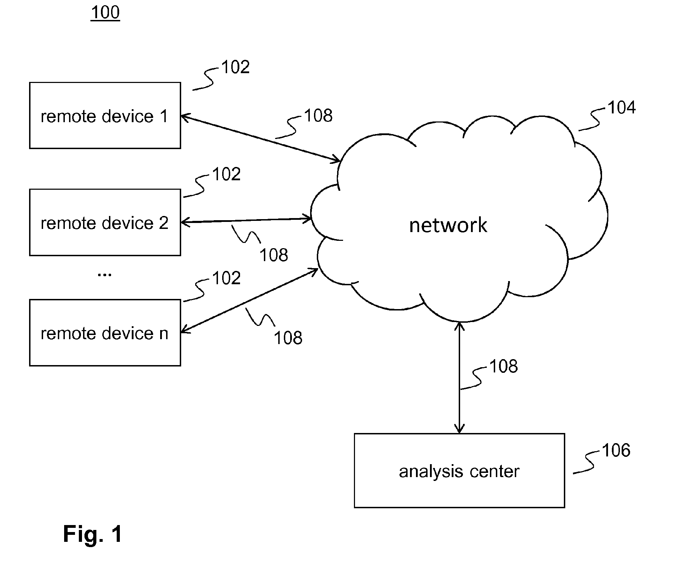

Figure 1 shows a general and simplified block diagram of a system in accordance with the invention. A number n of networked remote devices 102 are connected to a network 104, e.g. the internet, via network connections 108. An analysis center, 106, is also connected to the network via network connection 108. Remote devices 102 ultimately providing access to the service are located at the user's premises, and are connected, in addition to being generally connected to the internet, represented by cloud 104 in figure 1, or an internet gateway controlled by the service provider (not shown), to analysis center 106. The connections may be provided through physically separate lines (not shown), but may also be provided through separate virtual connections over a shared physical line.

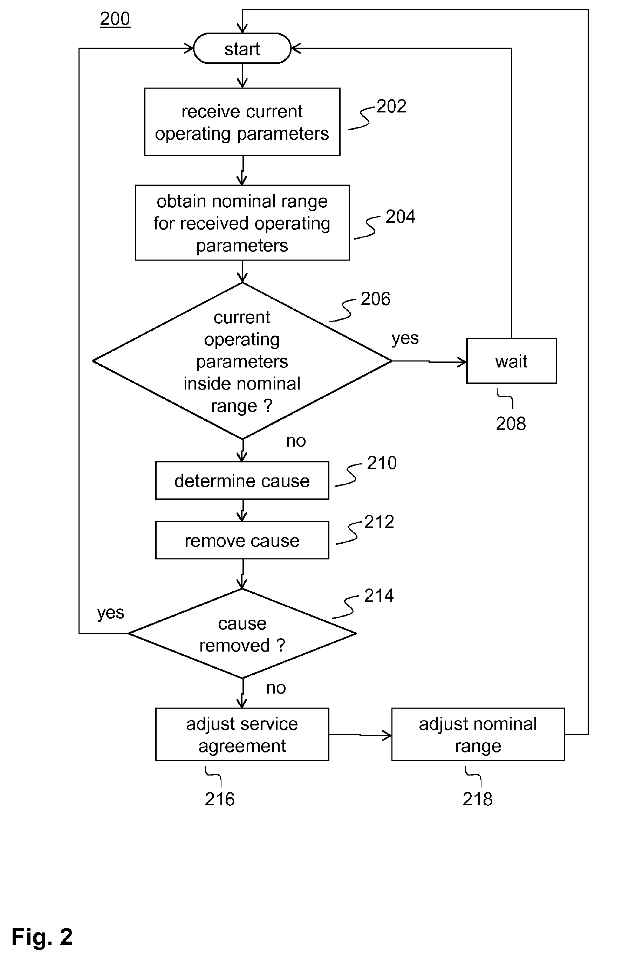

Figure 2 shows a flow diagram for an exemplary embodiment of the method in accordance with the invention and in accordance with the system that is generally represented in figure 1. In the exemplary embodiment the service that a user has subscribed to is for example a high-speed internet connection. In accordance with the invention remote devices 102 transmit messages comprising operating parameters relevant for the service offered. In this case, the operating parameters include, e.g., connection speed and error rates of the connection. Other parameters that may be considered relevant depend from the way the service is provided. In ADSL, short for Asymmetric Digital Subscriber Line, for example, data is transmitted on a number of discrete frequencies, which taken together form one connection. In case individual ones of these frequencies experience spurious or persistent disturbance or interference, these frequencies may be excluded from being used. Such exclusion generally reduces the maximum data rate that can be achieved on this physical connection. The disturbance or interference may occur only after the service agreement was closed. The disturbance may result in the performance agreed upon when closing the service agreement not being provided, either temporarily, or persistently. A user may not notice such underperformance until after a while. However, if the service provider has knowledge of sub-par performance, proactive measures can be taken to ensure a satisfying user experience. In the ADSL example the frequencies experiencing disturbances or interferences may be communicated along with other operating parameters.

In step 202 of figure 2 analysis center 106 receives a message from remote device 102 comprising current data on relevant operating parameters as described before. Transmission may be in the form of a general IP-based message, or using specific remote management protocols, e.g. as stipulated in the TR069 standard. In step 204 analysis center 106 obtains data on nominal ranges for the received operating parameters. Steps 202 and 204 may also be swapped in their order. In step 206 analysis center 106 compares the current data and the nominal ranges. In case the comparison reveals that the current operating parameters are within the nominal range the method waits for a predetermined time, step 208, before starting over. In case the comparison reveals that the current operating parameters are outside the nominal range the method invokes a process for determining the cause, step 210. If a determined cause can be removed, step 212, removing the cause is triggered, and the method is started over if removal was successful, step 214. If the cause cannot be removed, temporarily or for good, a process for offering an adjusted service agreement is triggered, step 216, and the method started over with adjusted nominal range, step 218.

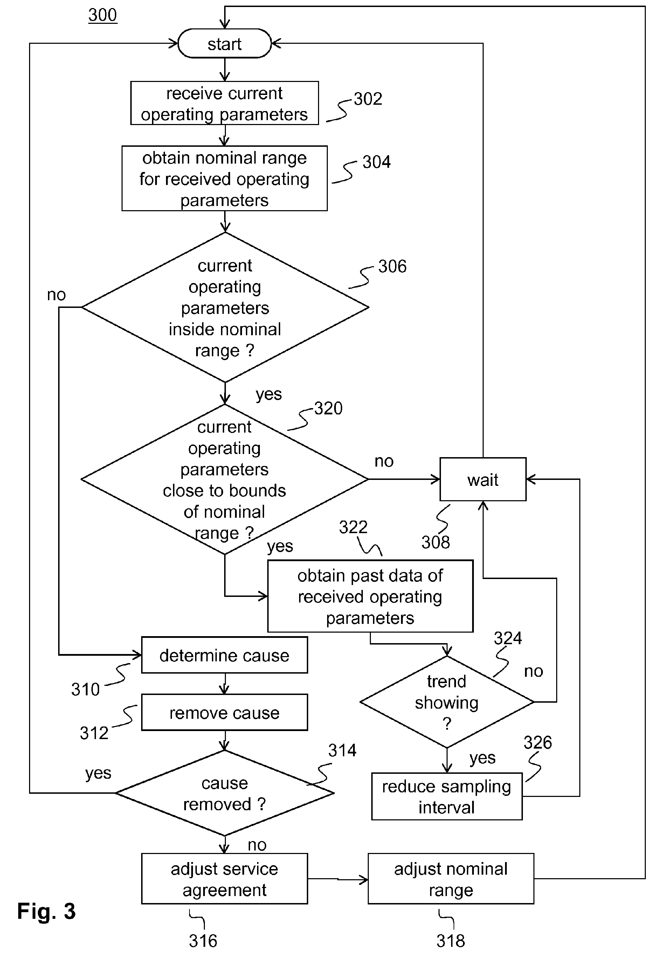

Figure 3 shows an embodiment of the method in accordance with the invention, in which the method tries to anticipate impending operation outside of the nominal range. Steps 302 to 306 and 310 to 318 correspond to steps 202 to 206 and 210 to 218 of figure 2 and will not be discussed in detail. This embodiment differs, however, when operation within nominal range is detected. In this case, in step 320, the method determines whether or not the current operating parameters are close to the bounds of the nominal range. If not, the method continues to step 308 before starting over. If, however, the current operating parameter is close to a bound of the nominal range, the method obtains, step 322, past data for the current operating parameter, and identifies, step 324, whether a trend is showing for the operating parameter. If no trend is detected, the variation is considered normal and the method continues to step 308 before starting over. If a trend is showing or developing, the method reduces the sampling interval for the operating parameter, step 326, and only then continues to step 308 before starting over.

## Claims

1. A method of predicting and/or avoiding support calls from users or subscribers of a networked service including the steps of:
- receiving, from a device located remotely at a user's premises and attached via a network connection, and at first intervals, data indicating current operating parameters of the user device;
- comparing the operating parameters with corresponding predetermined nominal parameters and tolerances;
- depending on the result of the comparison, in case of operation outside a range defined by the nominal parameters and tolerances, initiating a process for determining the cause of the operation below nominal parameters and tolerances;
- in case the cause can be removed, initiating the removal;
- in case the cause cannot be removed, contacting the user/subscriber for offering an adjusted subscription of the networked service.

2. The method of claim 1, wherein the first intervals are defined by predetermined independent time intervals, or by predetermined accumulated usage times or predetermined accumulated consumed amount of the networked service.

3. The method of claim 1 or 2, wherein the first intervals are reduced in dependency of the frequency of occurrence of operation outside of the range defined by the nominal parameters and tolerances or when the operating parameters approach the tolerances.

4. The method of any one of the preceding claims, wherein current operating parameters include momentary values or values recorded, continuously or at sampling intervals, over a sampling period.

5. The method of claim 4, wherein the accumulated usage time or consumed amount is reset when or after the value has been received.

6. The method of any one of the preceding claims, wherein the process for determining the cause includes an analysis of stored past data representative of operating parameters of the user device.

7. The method of claim 6, wherein the process for determining the cause is initiated when the current operating parameters approach the bounds of the range defined by the nominal parameters and tolerances, before exceeding the range's bounds, and wherein the process further includes identifying a gradual shift of one or more operating parameters over time towards an upper or lower bound of the range.

8. The method of any one of the preceding claims, wherein operating parameters include one or more of the non-exclusive list comprising data rate, latency, response times, quality of service, times of interruption of service, pressure, volume flow, and temperature.

9. The method of any one of the preceding claims, wherein the operating parameters are taken into account for the comparison in accordance with associated weighting factors.

10. The method of any one of the preceding claims, wherein the operating parameters are received in response to a networked device transmitting automatically or in response to a previous request.

11. The method of any one of the preceding claims, further including, in case the cause cannot immediately be removed, offering a temporal adjustment of the subscription until the cause has been removed.

12. The method of claim 11, wherein the temporal adjustment includes subscription at reduced price or compensation through one or more additional services.

13. A system including one or more devices located remotely at a user's premises, a central unit, and a network connection between the remote devices and the central unit, wherein the system is adapted to execute the method of any one of the preceding claims.
